# EUROPEAN PATENT SPECIFICATION

(11) **EP 1 820 709 B1**
(45) Date of publication and mention of the grant of the patent: **16.03.2011**
(21) Application number: 07001164.8
(22) Date of filing: 19.01.2007
(51) Int. Cl.: B60T 8/17

(54) **Adaptive deceleration control for commercial truck**
Adaptive Abbremssteuerung für Nutzlaster
Contrôle de décélération adaptatif pour camion commercial

(30) Priority: 16.02.2006 US 355666
(43) Date of publication of application: 22.08.2007
(73) Proprietor: International Truck Intellectual Property Company, LLC., Warrenville, IL 60555 (US)
(72) Inventor: Carlstrom, Kevin, R., Fort Wayne IN 46804 (US); Larson, Gerald, L., Fort Wayne IN 46804 (US)
(74) Representative: Kuhnen & Wacker

(56) References cited:
- WO-A-01/49542
- WO-A-93/18949
- WO-A-2005/085030

## Description

### Field of the Invention

This invention relates generally to motor vehicles that, in addition to having foundation brakes, have mechanisms in their powertrains that can be operated to decelerate a moving vehicle independently of foundation brakes. The invention further relates to a system and method for determining if braking torque that is potentially available by operating such mechanisms is sufficient to fully satisfy a braking request, thereby making application of the foundation brakes unnecessary.

### Background of the Invention

A motor vehicle, especially a large one like a heavy truck or highway tractor, may be equipped with one or more mechanisms in its engine/powertrain that when operated can apply a load on the engine/powertrain for decelerating the vehicle. Examples of such mechanisms are devices like exhaust brakes, engine brakes, and driveline retarders. Downshifting of a transmission can also decelerate a vehicle.

The ability to decelerate a vehicle is also a function of vehicle weight. The heavier a vehicle, the greater the kinetic energy that must be dissipated in order to decelerate it.

All large motor vehicles have foundation brakes that are the primary means for decelerating them. Foundation brakes apply friction forces to rotating wheels, creating torque that opposes wheel rotation, and also generating heat that raises brake temperature. That torque creates forces at the interfaces between the wheels' tires and road surface that oppose the direction of vehicle motion along the road, thereby decelerating the vehicle. Every application of the foundation brakes contributes to wear of brake linings or brake pads.

A system and method that can mitigate brake temperature rise and reduce such wear even in what may seem fairly small ways can be meaningful to the operation of commercial vehicles like large trucks and highway tractors. The use of engine/powertrain mechanisms is one possibility for accomplishing this, but insofar as the inventors are aware, there exists no effective system or method for doing so, especially a system and method that can integrate the operation of various braking mechanisms with foundation brakes while taking into account the substantial difference in vehicle weight between unloaded and fully loaded conditions.

Certain motor vehicles (commonly called hybrids) have energy storage means, such as air tanks and/or storage batteries, that capture kinetic energy to decelerate a moving vehicle (such method of deceleration sometimes being called regenerative braking). If sufficient energy can be captured to satisfy a deceleration request, foundation brakes need not be applied. A system and method that can integrate the operation of various engine/powertrain braking mechanisms with foundation brakes, while taking into account the substantial difference in vehicle weight between unloaded and fully loaded conditions, in manners as herein contemplated by the inventors, would typically give precedence to regenerative braking. When a braking request cannot be satisfied by regenerative braking alone, or when the on-board energy storage means cannot accept more energy for storage, then the use of engine/powertrain braking mechanisms that do not store energy becomes appropriate before foundation brakes need be applied. Only when such mechanisms cannot satisfy a deceleration request does application of foundation brakes become necessary:

The WO 01/49542 A1 discloses a device and a procedure for braking a vehicle with a main brake and an auxiliary brake, where the capacity of the auxiliary brake can be utilized fully even when the road is slippery and where the total braking effect of the vehicle is distributed more evenly between the driven and undriven wheels of the vehicle compared to a conventional brake device. As the main brake initially applies a braking effect only to the vehicle's undriven wheels, a gradual equalization of the braking effect between the driven and undriven wheels is achieved with the requested increase in braking effect. As the braking effect of the main brake is initially applied only to the vehicle's undriven wheels, the braking load on the braking components of the driven wheels reaches a high level not too early, a level that causes a risk of the driven wheels slipping of the road surface. The main brake applies a force pneumatically to the wheels and the auxiliary brake can be an exhaust brake, a compression brake or a retarder.

The WO 93/18949 A1 discloses a motor vehicle according to the preamble of claim 1.

### Summary of the Invention

The present invention relates to a novel adaptive deceleration control that integrates the operation of various braking mechanisms with foundation brakes while taking into account the substantial difference in vehicle weight between unloaded and fully loaded conditions. The invention contemplates avoiding the use of the foundation brakes when relatively light decelerations are requested by the driver of a vehicle and instead using mechanisms present in the engine/powertrain to provide appropriate braking for light decelerations. Light decelerations can be performed in this way over an initial portion of the range of depression of the brake pedal when operated by the driver. Depressions of the brake pedal beyond this initial range cause the foundation brakes to be applied.

As alluded to above, the inventors contemplate that the use of such energy-dissipating mechanisms will not be considered by a control system when a vehicle is a hybrid, if regenerative braking alone can satisfy a deceleration request.

Operation of various braking mechanisms that are part of a vehicle powertrain is requested when evaluation of a deceleration request discloses that operation of one or more of such mechanisms can satisfy the request, thereby precluding the need to apply foundation brakes. Brake pedal depression beyond a range within which the mechanisms are potentially capable by themselves of satisfying the request, causes foundation brake application so that a fault that does not result in braking by the mechanisms will cause the foundation brakes to be applied when the driver, sensing lack of braking, depresses the pedal beyond the range.

One generic aspect of the present invention relates to a motor vehicle comprising a chassis comprising wheels on which the vehicle travels, at least some of which are driven by an internal combustion engine through a powertrain. A brake system for braking the wheels comprises an actuator that is operated by a driver of the vehicle to brake the vehicle by selective operation of foundation brakes at the wheels and of one or more mechanisms in the powertrain capable of applying braking torque to driven wheels.

A sensor associated with the actuator discloses vehicle deceleration request data corresponding to a vehicle deceleration request by the driver. A processor executes an algorithm for carrying out the steps a)-g) described in claim 1.

Braking that is performed in accordance with the invention gives more consistent brake pedal operation that is less affected by the vehicle load, meaning that when a vehicle is traveling at a given speed, a given amount of brake pedal displacement will consistently produce essentially the same deceleration independent of load.

One of the benefits of such operation occurs during a situation where a vehicle is lightly loaded and traveling at a speed where an ABS braking system would not come into play. The inventive motor vehicle would be able to decelerate in a manner that does not lock the wheels, thereby avoiding wear that tends to make tires out-of-round when rotating wheels suddenly lock.

Because certain principles of the invention take vehicle weight into account, the same benefit is realized in a like situation where the vehicle is instead heavily, rather than lightly, loaded. It is believe that this attribute can contribute to improved safety because braking will be more consistent over a range of loads while brake temperature rises that might otherwise occur can now be avoided.

The foregoing, along with further features and advantages of the invention, will be seen in the following disclosure of a presently preferred embodiment of the invention depicting the best mode contemplated at this time for carrying out the invention. This specification includes drawings, now briefly described as follows.

### Brief Description of the Drawings

Figure 1 is a general schematic diagram of a portion of a motor vehicle relevant to an understanding of vehicle deceleration control principles of the present invention.

Figures 2A, 2B, 2C, and 2D collectively comprise a flow diagram for an exemplary algorithm that implements the invention and is repeatedly executed by a processor in an electronic systems controller shown in Figure 1.

Figure 3 is a graph showing certain relationships that are present in the embodiment shown in Figure 1 for implementing deceleration control principles.

Figure 4 is a graph showing examples of certain relationships associated with the deceleration control principles.

Figure 5 is a graph showing more examples of relationships associated with the deceleration control principles.

Figure 6 is a graph showing still more examples of relationships associated with the deceleration control principles.

Figure 7 is a graph showing still more examples of relationships associated with the deceleration control principles.

Figure 8 is a diagram showing certain forces acting on a trailer for explaining how the weight of a trailer being towed by a motor vehicle that embodies the inventive deceleration control principles can be calculated and its effect included in calculating total vehicle weight.

### Description of the Preferred Embodiment

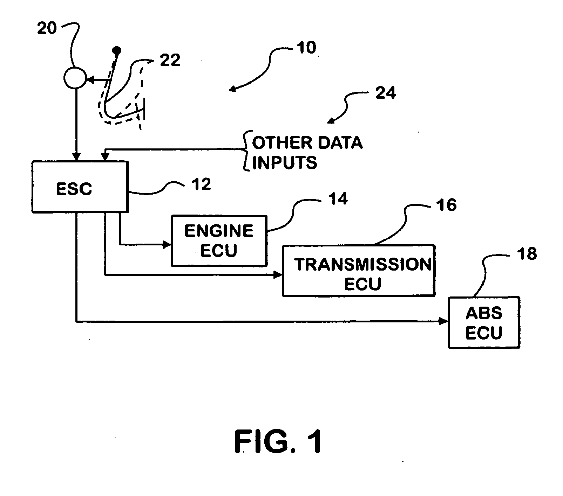

Figure 1 shows a portion of a motor vehicle 10 relevant to an understanding of the vehicle deceleration principles of the present invention. An electronic systems controller (ESC) 12 is in communication with an engine electronic control unit (engine ECU) 14, a transmission electronic control unit, (transmission ECU) 16, and an anti-lock brake system electronic control unit (ABS ECU) 18. A sensor 20 that is associated with a brake pedal 22 provides a data input to ESC 12. Other data inputs to ESC 12 are designated by the general reference numeral 24.

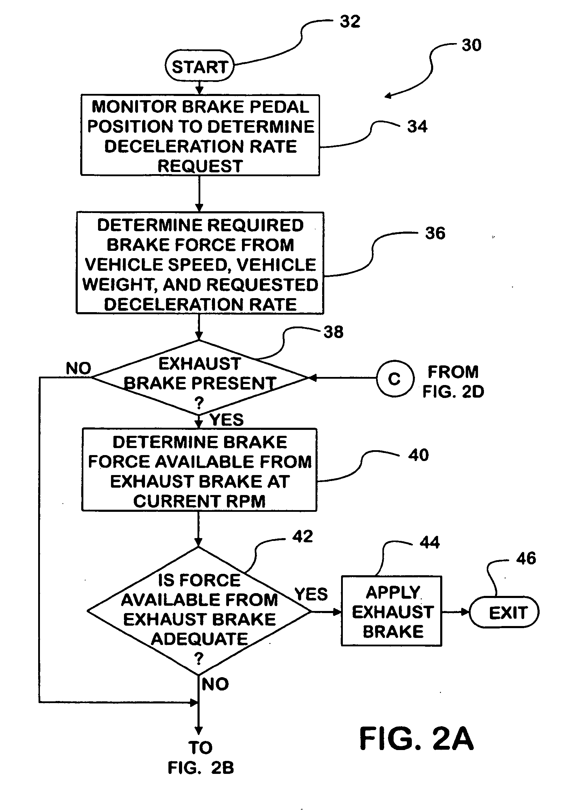

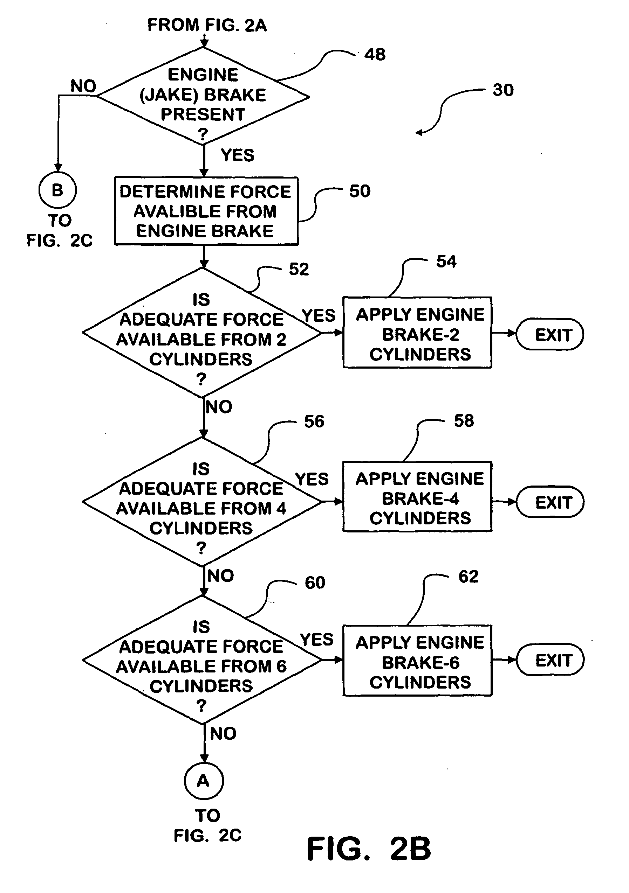

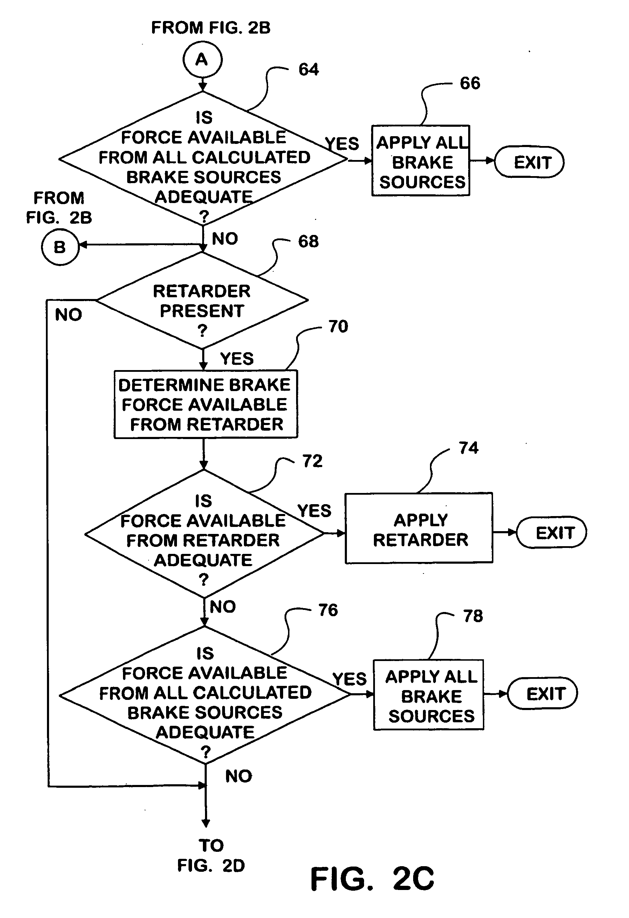

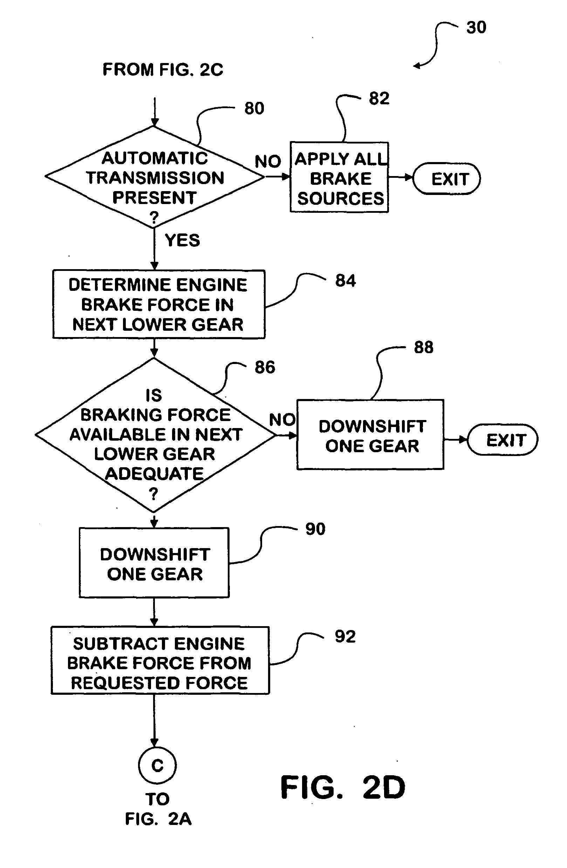

ESC 12 comprises a processor that communicates with processors of each ECU 14, 16, 18 to control braking of vehicle 10 in accordance with brake request data from sensor 20 as processed by an algorithm 30 that is programmed in ESC 12 and that will be explained with reference to Figures 2A, 2B, 2C, and 2D.

Algorithm 30 iterates at a rate sufficiently fast to track changes in brake pedal position as signaled by sensor 20. The algorithm begins at a start 32, shown in Figure 2A. A following step 34 develops from sensor 20 a data value corresponding to the position of brake pedal 22. Some of the other data inputs 24 are data representing vehicle speed and data representing the weight of the vehicle.

A step 36 processes the data value for brake pedal position, the data value for vehicle speed, and the data value for vehicle weight to determine a data value for brake force that must be applied to the moving vehicle in order to satisfy the request. That brake force can be equated to brake torque that needs to be applied to the vehicle's wheels.

The vehicle chassis comprises wheels on which the vehicle travels. Those wheels may vary in number and typically include driven wheels and non-driven wheels. Driven wheels are those that are coupled through a powertrain to an internal combustion engine. Various aspects of engine operation are controlled by engine ECU 14. Various aspects of transmission operation are controlled by transmission ECU 16.

Non-driven wheels are those that lack coupling through the powertrain to the engine. Depending on the specific vehicle powertrain configuration, certain wheels that are typically considered non-driven wheels may temporarily become driven wheels. It is also possible that driven wheels may be temporarily placed in non-driven relation with the engine, such as when the transmission is placed in neutral.

All wheels of a vehicle typically have foundation brakes that are typically drum- and/or disc-brakes, actuated either hydraulically or pneumatically to brake the wheels by friction through ABS ECU 18.

The next series of steps in algorithm 30 determine if the vehicle engine/powertrain has certain mechanisms other than foundation brakes that can be operated to brake the engine/powertrain. In this embodiment, such devices include: an engine exhaust brake that can increase engine back pressure by restricting exhaust flow; an engine brake, commonly known as a "Jake" brake, that is associated with the engine exhaust valves to cause them to open in the vicinity of top dead center and vent charge air that has been compressed in an engine cylinder during the immediately preceding compression stroke so that the energy of compression is not returned to the engine crankshaft during the ensuing downstroke; and a driveline retarder that may take any of several different forms to impose additional load on the engine. Any controllable device or mechanism that will produce drivetrain losses resulting in vehicle deceleration can serve as a retarder during certain operating conditions. For example, an engine cooling fan that can be selectively connected to and disconnected from the engine could be used as a retarder during certain conditions. Other devices and mechanisms include air intake throttle valves, electrical loads, and energy storage devices that are not associated with hybrid vehicle operation.

Other mechanisms in the powertrain may also be present for braking driven wheels. If a vehicle has a transmission that is capable of being shifted automatically, downshifting of the transmission can exert braking on the engine/powertrain to slow the vehicle. Some transmissions have transmission retarders that are similar to engine retarders in that they can be operated to apply a load to the engine/powertrain via the transmission without downshifting. Downshifting offers the possible advantage of more effective deceleration because it makes the engine accelerate to a higher speed that will operate any accessory loads directly driven by the engine at increased speed, thereby increasing their energy dissipation.

With the needed brake force having been determined by step 36, potential resources, such as those just mentioned, for providing the increased load on the engine/powertrain required to meet the needed brake force can be ascertained and evaluated.

A step 38 determines if an exhaust brake is present in the engine exhaust system. If so, a step 40 determines the brake force that the exhaust brake could apply at the current engine speed (RPM) to decelerate the vehicle if the exhaust brake were to be operated. A step 42 then compares the results of steps 36 and 40 to determine if operation of the exhaust brake would be sufficient by itself to satisfy the brake request. If so, the exhaust brake is operated, as shown by a step 44, and the current iteration of the algorithm ends (reference numeral 46).

The exhaust brake is operated by ESC 12 communicating to engine ECU 14 data representing the extent to which the exhaust brake should be applied. Engine ECU 14 contains an appropriate exhaust brake control strategy for operating the exhaust brake in accordance with the brake request.

Had step 38 determined that no exhaust brake was present, the algorithm would have skipped steps 40 and 42 and instead performed step 48 shown in Figure 2B to determine if an engine brake such as a "Jake" brake is present in the engine. If so, a step 50 determines the brake force that such a brake could apply to decelerate the vehicle if it were to be operated. Because such a brake can act selectively on certain engine cylinders, a step 52 then compares the result of step 36 and the result of step 50 based on use of two cylinders for engine braking to determine if brake action on two cylinders would be sufficient to fully satisfy the brake request. If so, the engine brake acts on only two of the engine cylinders, as shown by a step 54, and the current iteration of the algorithm ends.

The engine brake is operated by ESC 12 communicating data to engine ECU 14 for causing the engine ECU to act on two cylinders. Engine ECU 14 contains an appropriate control strategy for acting on the selected engine cylinders.

Had step 52 determined that engine brake action on two cylinders was insufficient to satisfy the brake request, the algorithm would have continued with a step 56 to determine if engine brake action on four cylinders would be sufficient to fully satisfy the brake request. Step 56 compares the result of step 36 and the result of step 50 based on four cylinders being used for engine braking. If step 56 discloses that four cylinders are adequate, the engine brake acts on them, as shown by a step 58, and the current iteration of the algorithm ends. The engine brake is operated by ESC 12 communicating data to engine ECU 14 for causing the engine ECU to act on four cylinders.

Had step 56 determined that engine brake action on four cylinders was insufficient to satisfy the brake request, the algorithm would have continued with a step 60 to determine if engine brake action on six cylinders would be sufficient to fully satisfy the brake request. Step 60 compares the result of step 36 and the result of step 50 based on six cylinders being used for engine braking. If step 60 discloses that six cylinders are adequate, the engine brake acts on them, as shown by a step 62, and the current iteration of the algorithm ends. The engine brake is operated by ESC 12 communicating data to engine ECU 14 for causing the engine ECU to act on six cylinders.

As the reader can appreciate, this example has assumed a six-cylinder engine.

Had step 42 determined that full operation of the exhaust brake would be insufficient to fully satisfy the deceleration request, then the algorithm would have continued at step 48 and the algorithm would have proceeded to execute as described above. Had any of steps 52, 56, and 60 determined that the engine brake could satisfy the deceleration request from sensor 20, the engine brake would have been applied to the appropriate extent without the exhaust brake being operated.

If an iteration of the algorithm reaches step 60 and that step determines that the engine brake cannot satisfy the deceleration request, then Figure 2C shows that the algorithm performs a step 64 that determines if combined use of the exhaust brake and the engine brake would be able to satisfy the deceleration request. If so, then a step 66 causes both brakes to be operated in appropriate ways to provide the needed braking force and the current iteration of the algorithm ends.

If step 64 determines that operation of both brakes is insufficient to satisfy the request, or if step 48 determines that an engine brake is not present, then a step 68 determines if a driveline retarder is present. If so, a step 70 determines the brake force that such the retarder could apply to decelerate the vehicle if it were to be operated. A step 72 then compares the result of step 36 and the result of step 70 to determine if operation of the retarder would provide sufficient brake force to fully satisfy the brake request. If so, the retarder is applied, as shown by a step 74, and the current iteration of the algorithm ends. Application of the retarder will occur without application of the exhaust brake or the engine brake.

If step 72 had determined that operation of the retarder by itself would be insufficient to satisfy the deceleration request, then a step 76 determines if concurrent operation of the exhaust brake, of the engine brake and of the retarder would be able to satisfy the deceleration request. If so, then a step 78 causes all three to be operated in appropriate ways to provide the needed braking force, and the current iteration of the algorithm ends.

Had step 76 determined that operation of the exhaust brake, of the engine brake and of the retarder would be unable to satisfy the deceleration request, then a step 80 (see Figure 2D) occurs. That step determines if the powertrain includes an automatic transmission. If no automatic transmission is present, then a step 82 causes the exhaust brake, the engine brake, and the retarder to be operated, and the current iteration of the algorithm ends because the algorithm contemplates no more braking devices in the engine/powertrain.

If step 80 determines that an automatic transmission is present, then a step 84 determines how much brake force could be gained if the transmission were to be downshifted one gear and if such downshifting would provide at least enough braking force to satisfy the deceleration request. If that is the case, then a step 88 initiates the downshift, and the current iteration of the algorithm ends. The downshift occurs without the exhaust brake, the engine brake, or the retarder being operated.

If step 84 determines that such downshifting would not by itself provide at least enough braking force to satisfy the deceleration request, a step 90 initiates the downshift, but that is followed by a step 92 that subtracts the engine brake force from the requested force, and the algorithm returns to step 38 to continue through the various steps as already described to provide additional braking. Because a downshift accelerates the engine, more braking force can be obtained from powertrain braking/retarding devices, but because the downshift satisfied some of the request, the portion that was satisfied must be subtracted from the request to avoid excess brake force, and that is the reason for step 92 which provides the difference as the basis for the next iteration beginning at C in Figure 2A.

From this description, one can see that the use of various powertrain mechanisms is based on a hierarchy.

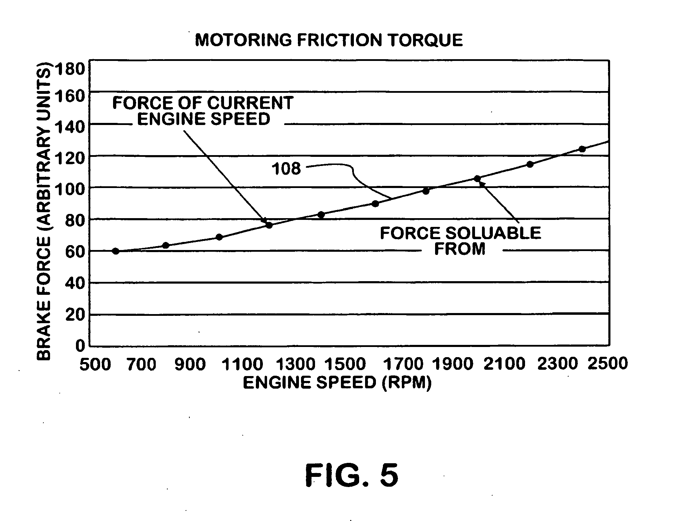

Figures 5, 6, and 7 disclose representative traces of braking force, or torque, that is available from the various braking mechanisms that have been described. The trace 108 in Figure 5 shows the effect of downshifting the transmission. If the engine accelerator pedal in the vehicle is released while the engine is running at a speed of approximately 1200 RPM and the transmission is in a particular gear, the engine and powertrain will impose an arbitrary braking force of approximately 80 units on driven wheels. If the transmission is downshifted one gear, the engine will accelerate to about 2000 RPM and the braking force will increase to about 110 units on the driven wheels.

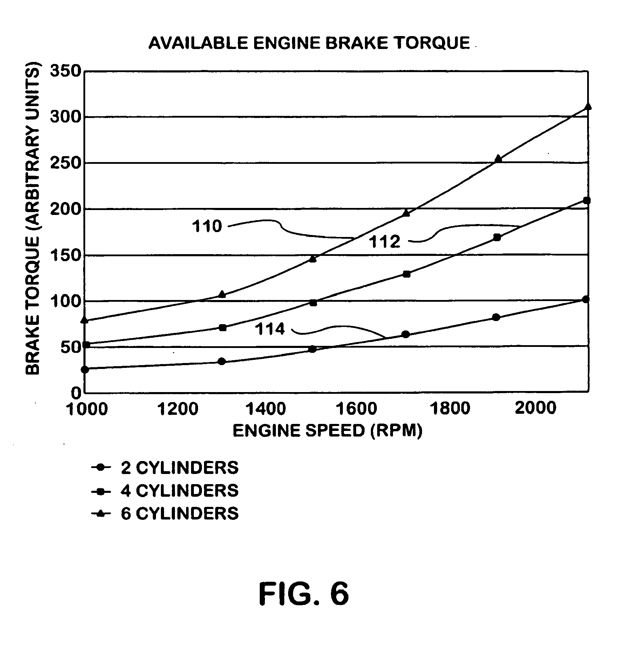

The traces 110, 112, and 114 in Figure 6 describe brake torque that is potentially available from a "Jake" brake when braking six, four, and two engine cylinders respectively. For each trace, the available brake torque increases with increasing engine speed.

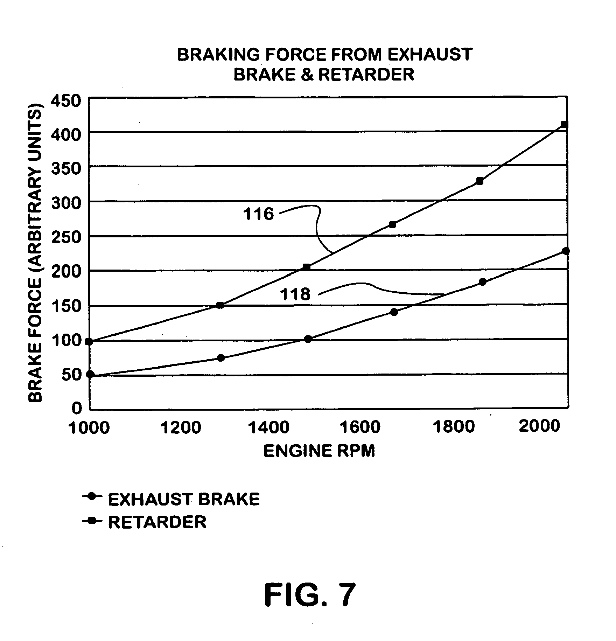

The traces 116 and 118 in Figure 7 describe braking force that is potentially available from a driveline retarder and an exhaust brake respectively. For each trace, the available braking force increases with increasing engine speed.

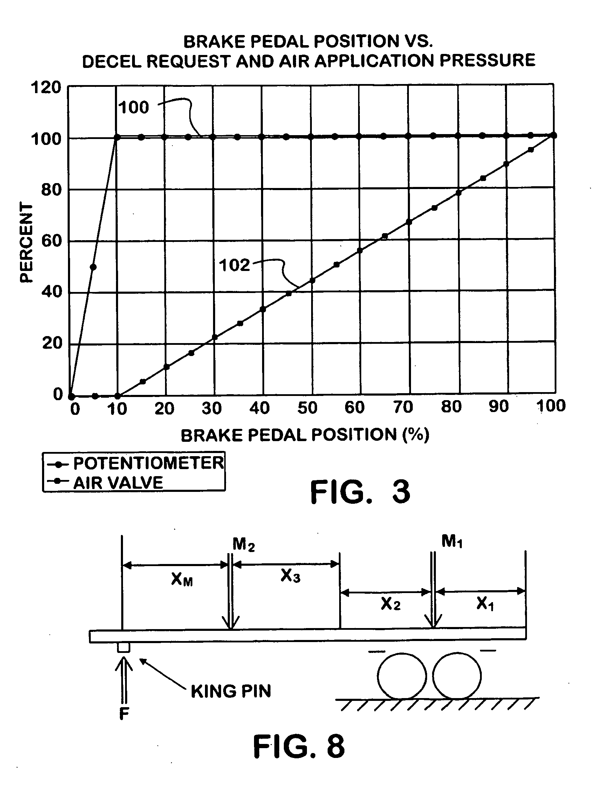

As mentioned earlier, the adaptive deceleration control of the present invention strives to use available engine/powertrain mechanisms for braking, instead of foundation brakes, when relatively smaller deceleration requests requesting relatively light braking are issued by sensor 20. For accomplishing this, sensor 20 is calibrated in a particular way in relation to travel of brake pedal 22, as explained with reference to Figures 1 and 3.

Over an initial portion of the range of brake pedal travel in the direction of increasing depression of the brake pedal, the foundation brakes are not applied. This is the range between the solid and broken line positions of pedal 22 in Figure 1. It is only after the brake pedal has been depressed beyond that initial portion that the foundation brakes are applied. The trace 102 in Figure 3 shows the percentage to which the foundation brakes are applied as a function of brake pedal travel. During an initial 10% of the range of brake pedal travel depicted in Figure 1, the foundation brakes are not applied. Over the remainder of the range of brake pedal travel, the foundation brakes are increasingly applied with increasing pedal travel until they are fully applied at maximum pedal travel.

If sensor 20 is a potentiometer, pedal travel from 0% to 10% of its range moves the potentiometer wiper over its full range of travel, with the wiper remaining at 100% of its range of travel as pedal travel increases beyond the initial 10% of its range of travel. This is portrayed by trace 100 in Figure 3. It is within the initial 10% range of pedal travel that algorithm 30 is effective to decelerate the vehicle without use of the foundation brakes. Because foundation brakes will be applied when pedal travel exceeds the initial range, the strategy inherently provides a "fail-safe" feature that guards against a fault that prevents braking during pedal travel over the initial range.

As also mentioned earlier, the data value for the amount of pedal travel as processed by ESC 12 is understood as a request to decelerate the vehicle at a deceleration corresponding to that data value. Because vehicle weight is a factor in accelerating and decelerating a vehicle, vehicle weight needs to be at least approximately known in order for algorithm 30 to be effective in invoking engine/powertrain braking that will result in the requested deceleration.

For a motor vehicle having an air suspension, on-board electronics technology can provide cost-efficient measurement of vehicle weight, especially when the use of measured weight is shared among various systems to provide various performance improvements. Data representing vehicle weight is used in the data processing that occurs during step 36 of algorithm 30. Measurement of vehicle weight can be made using sensors associated with a vehicle's air suspension.

In a vehicle such as a straight truck or highway tractor, measurement of weight is quite straightforward. Two pressure sensors, one for the front suspension, the other for the rear suspension, may be sufficient. Air pressure is adjusted to reference (frame to axle distance), and the measured pressure defines weight. Four pressure sensors, two at the front and two at the rear, may also be used.

In a tractor-trailer combination, a trailer having air suspension allows associated sensors to provide trailer weight. Measuring weight involves inflation of suspension to reference displacement and measurement of pressure.

A trailer lacking air suspension requires a different method. Tare weight of the tractor is measured prior to trailer attachment. Assuming that tare weight of the trailer is known, a uniformly loaded trailer weight is approximated from weight on the tractor's fifth wheel by an understanding of trailer wheel location and consequent center of gravity (CG)

Figure 8 diagrammatically shows a trailer on which various forces are acting. Weight is defined by the load distributed from the center of the trailer tandem axles to the end of the trailer (distance x₁). Weight M₁ is twice the weight distributed across distance x₁. For weight M₁ to be balanced at axle center (CG) the weight distributed across distance x₂ is the same as that across distance x₁. i.e., x₁ = x₂.

Because the sum of distances x₂ + x₃ + x₄ is a known parameter and distance x₂ is readily resolved = ½(x₃ + x₄). This is the CG of M₂ which consequently allows solution for opposing king pin force F where the center of rotation for F is at the center of the tandem trailer axles. King pin force F is measured via suspension system air pressure at the tractor rear axles.

The braking required when the foundation brakes are not being applied and travel of pedal 22 is within the initial 10% range is generally proportional to the request from sensor 20 and the vehicle weight. However, an air brake valve is always operated in correlation with a specific pedal displacement. For a vehicle operating at or near gross weight, the load is preferably adjusted such that M₁=M₂ resulting in substantially the same weight applied to King Pin (or tractor driven wheels) as is applied to the trailer wheels.

For a vehicle not loaded to gross weight, the center of gravity of the load may vary depending upon factors such as unloading sequence. With air suspension on the trailer, load weight is the sum of the weight on the tractor drive wheels plus the weight on trailer wheels.

If the trailer does not have air suspension (part load) the user may enter distance x₁ into the truck on-board computer, and the distribution of the load from a grid layout. The estimated distribution then allows calculation of M₁ vs M₂

Further, the user may enter location of the tractor fifth wheel, since if the fifth wheel is not centered, some load will be shifted to the front axles (1 in. -> ~2% weight shift).

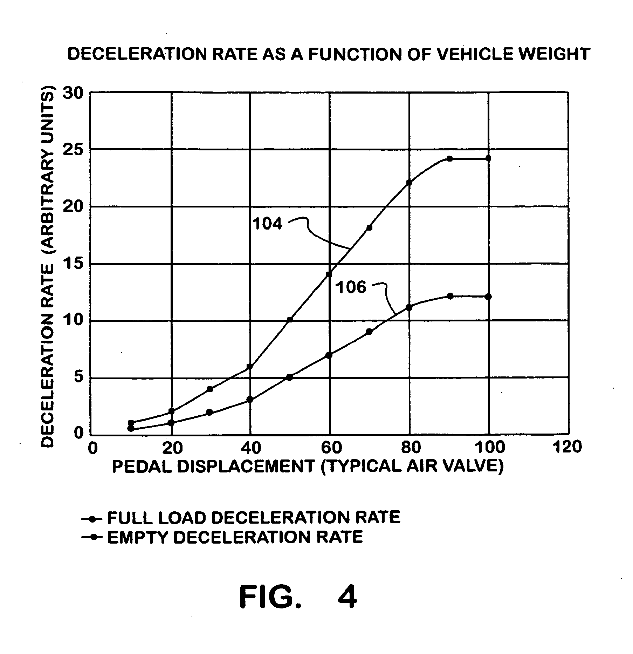

Figure 4 shows the influence of vehicle weight on deceleration. The trace 104 shows the correlation of deceleration (in arbitrary units) with operation of an air brake valve operated by pedal 22 for an empty (non-loaded) commercial vehicle. The trace 106 shows the correlation of deceleration (in arbitrary units) with operation of an air brake valve operated by pedal 22 for the same vehicle when fully loaded. For a given pedal displacement, the corresponding application of the foundation brakes will impart greater deceleration to the moving unloaded vehicle than when the vehicle is fully loaded.

In the absence of air suspension, gross weight of a tractor-trailer combination can be ascertained by any suitably appropriate way, many of which are known in the industry and utilize the know relationship between force, mass, and acceleration. Acceleration can be measured directly and/or mathematically calculated from velocity change over time; force can be calculated from engine torque.

While a presently preferred embodiment of the invention has been illustrated and described, it should be appreciated that principles of the invention apply to all embodiments falling within the scope of the following claims.

## Claims

1. A motor vehicle comprising:
a chassis comprising wheels on which the vehicle travels, at least some of which are driven by an internal combustion engine through a powertrain that comprises a transmission that can be shifted to different gears,
a brake system for braking the wheels comprising an actuator that is
operated by a driver of the vehicle to brake the vehicle by selective operation of foundation brakes at the wheels and of at least one mechanism in the engine/powertrain capable of applying braking torque to driven wheels,
a sensor associated with the actuator for disclosing vehicle deceleration request data corresponding to a vehicle deceleration request by the driver, and
a processor comprising an algorithm
a) for processing vehicle deceleration request data from the sensor to determine brake force needed to satisfy a vehicle deceleration request,
for processing data representing the brake force needed to satisfy the vehicle deceleration request and data representing brake force that is potentially obtainable by operating the at least one mechanism in the engine/powertrain and
for requesting operation of the at least one mechanism to satisfy the vehicle deceleration request and then exiting when processing discloses that operation of the at least one mechanism can satisfy the request,
**characterized in that**
b) when processing discloses that operation of the at least one mechanism cannot satisfy the request,
for requesting downshifting of the transmission and for determining both engine/powertrain brake force gain by such downshifting and if the increased engine/powertrain brake force resulting from such downshifting would be sufficient to satisfy the request,
c) with the algorithm then exiting if increased engine/powertrain brake force resulting from such downshifting would be sufficient,
d) but if increased engine/powertrain brake force resulting from such downshifting would not be sufficient to satisfy the request,
for subtracting from the request the portion of the request that would be satisfied by increased engine/powertrain brake force resulting from such downshifting to determine a force difference,
e) for processing data representing the force difference and data representing brake force that is potentially obtainable by operating the at least one mechanism in the engine/powertrain, and
f) for requesting operation of the at least one mechanism when processing discloses that operation of the at least one mechanism can satisfy the force difference,
g) with the algorithm exiting after requesting operation of the at least one mechanism to satisfy the force difference.

2. The motor vehicle as set forth in Claim 1 wherein the algorithm is structured to determine, according to a hierarchy of mechanisms, data representing brake force that is potentially obtainable by operating the at least one mechanism.

3. The motor vehicle as set forth in Claim 2 wherein the actuator operates the sensor over a range of operation and the algorithm is structured to cause application of the foundation brakes when the actuator operates the sensor beyond an initial portion of the range of operation.

4. The motor vehicle as set forth in Claim 3 wherein the actuator comprises a brake pedal and the sensor comprises a position sensor sensing brake pedal position.

5. The motor vehicle as set forth in Claim I wherein the algorithm is structured to include an estimate of vehicle weight data when determining brake force needed to satisfy a vehicle deceleration request.

6. The motor vehicle as set forth in Claim 1, wherein the at least one mechanism includes an engine brake and an exhaust brake.

## Patentansprüche

1. Kraftfahrzeug, aufweisend:
ein Fahrgestell, das Räder aufweist, auf denen sich das Fahrzeug fortbewegt, wobei zumindest ein Teil davon durch einen Verbrennungsmotor über einen Antriebsstrang angetrieben werden, der ein Getriebe aufweist, das in verschiedene Gänge geschaltet werden kann,
ein Bremssystem zum Bremsen der Räder, das einen Aktor aufweist, der durch einen Fahrer des Fahrzeugs betätigt wird, um das Fahrzeug durch eine selektive Betätigung von Basis-Bremsen an den Rädern und von zumindest einem Mechanismus in dem Motor/Antriebsstrang, der auf die angetriebenen Räder ein Bremsmoment übertragen kann, zu bremsen,
einen Sensor, der dem Aktor zugeordnet ist, um Fahrzeugverzögerungs-Anforderungsdaten entsprechend einer Fahrzeugverzögerungsanforderung durch den Fahrer bekanntzugeben, und
einen Prozessor, der einen Algorithmus aufweist
a) zum Verarbeiten der Fahrzeugverzögerungs-Anforderungsdaten von dem Sensor, um eine Bremskraft zu bestimmen, die benötigt wird, um einer Fahrzeugverzögerungsanforderung zu entsprechen,
zum Verarbeiten von Daten, die die Bremskraft darstellen, die benötigt wird, um der Fahrzeugverzögerungsanforderung zu entsprechen, und von Daten, die die Bremskraft darstellen, die potentiell erhalten werden kann, indem der zumindest eine Mechanismus in dem Motor/Antriebsstrang betätigt wird, und zum Anfordern des Betriebs des zumindest einen Mechanismus, um der Fahrzeugverzögerungsanforderung zu entsprechen, und dann zum Verlassen des Betriebs, wenn durch die Verarbeitung bekanntgegeben wird, dass der Betrieb des zumindest einen Mechanismus der Anforderung entsprechen kann,
b) **dadurch gekennzeichnet, dass**, wenn der Prozess erkennt, dass der Betrieb des zumindest einen Mechanismus der Anforderung nicht entsprechen kann,
zum Anfordern eines Rückschaltens des Getriebes und zum Bestimmen einer Motor/Antriebsstrang-Bremskraftverstärkung durch ein derartiges Rückschalten und ob die aus dem Rückschalten resultierende erhöhte Motor/Antriebsstrang-Bremskraft ausreichend wäre, um der Anforderung zu entsprechen,
c) wobei der Algorithmus anschließend den Betrieb beendet, wenn die erhöhte Motor/Antriebsstrang-Bremskraft, die aus diesem Rückschalten resultiert, ausreichend wäre,
d) doch wenn die erhöhte Motor/Antriebsstrang-Bremskraft, die aus diesem Rückschalten resultiert, nicht ausreichend wäre, um der Anforderung zu entsprechen,
zum Subtrahieren von der Anforderung den Anteil der Anforderung, dem durch die erhöhte Motor/Antriebsstrang-Bremskraft, die aus diesem Rückschalten resultiert, entsprochen werden könnte, um eine Kraftdifferenz zu bestimmen,
e) zum Verarbeiten von Daten, die die Kraftdifferenz darstellen, und von Daten, die die Bremskraft darstellen, die potentiell erhalten werden kann, indem der zumindest eine Mechanismus in dem Motor/Antriebsstrang betätigt wird, und
f) zum Anfordern des Betriebs des zumindest einen Mechanismus, wenn die Verarbeitung bekanntgibt, dass der Betrieb des zumindest einen Mechanismus der Kraftdifferenz entsprechen kann,
g) wobei der Algorithmus den Betrieb beendet, nachdem der Betrieb des zumindest einen Mechanismus angefordert worden ist, um der Kraftdifferenz zu entsprechen.

2. Kraftfahrzeug nach Anspruch 1, wobei der Algorithmus so strukturiert ist, dass entsprechend einer Hierarchie von Mechanismen Daten bestimmt werden, die die Bremskraft darstellen, die durch Betätigung des zumindest einen Mechanismus potentiell erhalten werden kann.

3. Kraftfahrzeug nach Anspruch 2, wobei der Aktor den Sensor innerhalb eines Betriebsbereichs betätigt und der Algorithmus so strukturiert ist, dass eine Anwendung der Basis-Bremsen bewirkt wird, wenn der Aktor den Sensor außerhalb eines initialen Abschnitts des Betriebsbereichs betätigt.

4. Kraftfahrzeug nach Anspruch 3, wobei der Aktor ein Bremspedal aufweist und der Sensor einen Positionssensor aufweist, der eine Bremspedalposition erfasst.

5. Kraftfahrzeug nach Anspruch 1, wobei der Algorithmus so strukturiert ist, dass er eine Schätzung der Fahrzeuggewichtsdaten beinhaltet, wenn die Bremskraft bestimmt wird, die benötigt wird, um einer Fahrzeugverzögerungsanforderung zu entsprechen.

6. Kraftfahrzeug nach Anspruch 1, wobei der zumindest eine Mechanismus eine Motorbremse und eine Abgasbremse beinhaltet.

## Revendications

1. Véhicule à moteur comprenant :
un châssis comprenant des roues sur lequel le véhicule roule, au moins certaines d'entre elles étant entraînées par un moteur à combustion interne par l'intermédiaire d'un groupe motopropulseur qui comprend une transmission pouvant passer à des vitesses différentes,
un système de frein pour freiner les roues, comprenant un actionneur qui est mis en fonctionnement par un conducteur du véhicule pour freiner le véhicule en faisant fonctionner sélectivement des freins de base sur les roues et au moins un mécanisme dans le moteur/groupe motopropulseur apte à appliquer un couple de freinage aux roues entraînées,
un capteur associé à l'actionneur pour décrire des données de demandes de décélération du véhicule correspondant à une demande de décélération du véhicule par le conducteur, et
un processeur comprenant un algorithme
a) pour traiter des données de demande de décélération du véhicule par le capteur pour déterminer la force de frein qui est nécessaire pour satisfaire une demande de décélération du véhicule,
pour traiter des données représentant la force de frein qui est nécessaire pour satisfaire la demande de décélération du véhicule et des données représentant la force de frein qui peut être obtenue potentiellement en faisant fonctionner le au moins un mécanisme du moteur/groupe motopropulseur, et
pour demander un fonctionnement du au moins un mécanisme pour satisfaire la demande de décélération du véhicule, puis sortir lorsque le traitement décrit que le fonctionnement du au moins un mécanisme ne peut pas satisfaire la demande,
**caractérisé en ce que**
b) lorsque le traitement décrit que le fonctionnement du au moins un mécanisme ne peut pas satisfaire la demande,
pour demander une rétrogradation de la transmission et pour déterminer à la fois le gain de force de frein de moteur/groupe motopropulseur par cette rétrogradation et si la force de frein augmentée du moteur/groupe motopropulseur provenant de cette rétrogradation serait suffisante pour satisfaire la demande,
c) puis par l'algorithme sortir si la force de frein du moteur/groupe motopropulseur provenant de cette rétrogradation serait suffisante,
d) mais si la force de frein augmentée du moteur/groupe motopropulseur provenant de cette rétrogradation ne serait pas suffisante pour la demande,
pour soustraire de la demande la partie de la demande qui serait satisfaite par la force de frein augmentée du moteur/groupe motopropulseur provenant de cette rétrogradation pour déterminer une différence de force,
e) pour traiter des données représentant la différence de force et des données représentant la force de frein qui peut être obtenue potentiellement en faisant fonctionner le au moins un mécanisme du moteur/groupe motopropulseur, et
f) pour demander un fonctionnement du au moins un mécanisme lorsque le traitement décrit que le fonctionnement du au moins un mécanisme peut satisfaire la différence de force,
g) sortir par algorithme après avoir demandé le fonctionnement du au moins un mécanisme pour satisfaire la différence de force.

2. Véhicule à moteur suivant la revendication 1, dans lequel l'algorithme est structuré pour déterminer, suivant une hiérarchie de mécanismes, des données représentant une force de frein qui peut être obtenue potentiellement en faisant fonctionner le au moins un mécanisme.

3. Véhicule à moteur suivant la revendication 2, dans lequel l'actionneur fait fonctionner le capteur sur une plage de fonctionnement et l'algorithme est structuré pour provoquer une application des freins de base lorsque l'actionneur fait fonctionner le capteur au-delà d'une partie initiale de plage de fonctionnement.

4. Véhicule à moteur suivant la revendication 3, dans lequel l'actionneur comprend une pédale de frein et le capteur comprend un capteur de position détectant la position de la pédale de frein.

5. Véhicule à moteur suivant la revendication 1, dans lequel l'algorithme est structuré pour comprendre une estimation de données de poids du véhicule lors de la détermination de la force de frein qui est nécessaire pour satisfaire à une demande de décélération du véhicule.

6. Véhicule à moteur suivant la revendication 1, dans lequel le au moins un mécanisme comprend un frein moteur et un frein sur échappement.
